# EUROPEAN PATENT APPLICATION

(11) **EP 4 682 211 A1**
(43) Date of publication of application: **21.01.2026**
(21) Application number: 25171949.8
(22) Date of filing: 23.04.2025
(51) Int. Cl.: C09D 5/33, C09D 5/32, C09D 7/41, C09D 7/48, C09D 7/61

(54) **COATING SYSTEMS FOR COMPOSITE PROTECTION**

(30) Priority: 18.07.2024 US 202418777132
(71) Applicant: The Boeing Company, Arlington, VA 22202 (US)
(72) Inventor: Schultz, Karen Ann, Arlington, 22202 (US); Seebergh, Jill Elisabeth, Arlington, 22202 (US); Olson, Nels Andrew, Arlington, 22202 (US); Vahey, Paul Griffin, Arlington, 22202 (US); House, Geoffrey Michael, Arlington, 22202 (US); Ung, Dara, Arlington, 22202 (US)
(74) Representative: Witte, Weller & Partner Patentanwälte mbB

(57) **Abstract**

Coating systems are presented. A coating system for a composite component comprises a light blocking layer configured to prevent transmission of at least one of ultraviolet light or visible light within desired wavelengths and configured to reflect infrared components of sunlight using a colorant.

## Description

### BACKGROUND INFORMATION

### 1. Field:

The present disclosure relates generally to coatings and more specifically to coating systems for composite materials.

### 2. Background:

Fiber-reinforced composite materials can be used for platforms including buildings or large vehicles such as aircraft, ships, cars, trains, and other modes of transportation. Operating environments for vehicles comprising fiber-reinforced composite materials can cause degradation of the fiber-reinforced composite materials if the fiber-reinforced composite materials are exposed to the operating environment.

Therefore, it would be desirable to have a method and apparatus that takes into account at least some of the issues discussed above, as well as other possible issues. Specifically, it would be desirable to provide coating systems for protection of fiber-reinforced composite materials from operating conditions.

### SUMMARY

An embodiment of the present disclosure provides a coating system for a composite component. The coating system comprises a light blocking layer configured to prevent transmission of at least one of ultraviolet light or visible light within desired wavelengths and configured to reflect infrared components of sunlight using a colorant.

Another embodiment of the present disclosure provides an aircraft. The aircraft comprises a composite component and a coating system on the composite component. The coating system comprises a light blocking layer configured to infrared components of sunlight with titanium dioxide and configured to prevent transmission of at least one of ultraviolet light or visible light within desired wavelengths using a chemical blocker.

Another embodiment of the present disclosure provides a coating system for a composite component. The coating system comprises a light blocking layer configured to provide a desired solar absorptivity with titanium dioxide and configured to prevent transmission of at least one of ultraviolet light or visible light within desired wavelengths using a chemical blocker. The light blocking layer comprises between 16-41 wt% titanium dioxide, and the chemical blocker.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a platform with a coating system in an operating environment in accordance with an illustrative embodiment;
**Figure 3** is an illustration of a cross-sectional view of a coating system on a composite material in accordance with an illustrative embodiment;
**Figure 4** is an illustration of an aircraft manufacturing and service method in the form of a block diagram in accordance with an illustrative embodiment; and;
**Figure 5** is an illustration of an aircraft in a form of a block diagram in which an illustrative embodiment may be implemented.

### DETAILED DESCRIPTION

The illustrative examples recognize and take into account several considerations. The illustrative embodiments recognize and take into account that components made of fiber-reinforced composite materials can be susceptible to degradation upon exposure to combinations of electromagnetic radiation, moisture, and heat. The illustrative embodiments recognize and take into account that it is desirable to protect fiber-reinforced composite materials from components of sunlight.

The illustrative embodiments recognize and take into account that it is desirable to protect fiber-reinforced composite materials without undesirably impacting other material characteristics or operating standards for a respective platform. The illustrative examples recognize and take into account that aircraft have several operating standards set by regulatory agencies. Additionally, the illustrative examples recognize and take into account that it is undesirable to increase weight of aircraft. The illustrative embodiments recognize and take into account that substantially increasing the thickness of coatings can increase the risk of cracking, will add weight, and may not meet Electromagnetic Effects (EME) standards for aircraft.

Described herein are coatings having the ability to block UV-visible light penetration at the composite surface (interior) while meeting requirements for visible color and solar absorptivity (exterior) without excessively thick layers of paint, thereby avoiding issues such as cracking, weight, EME and the like.

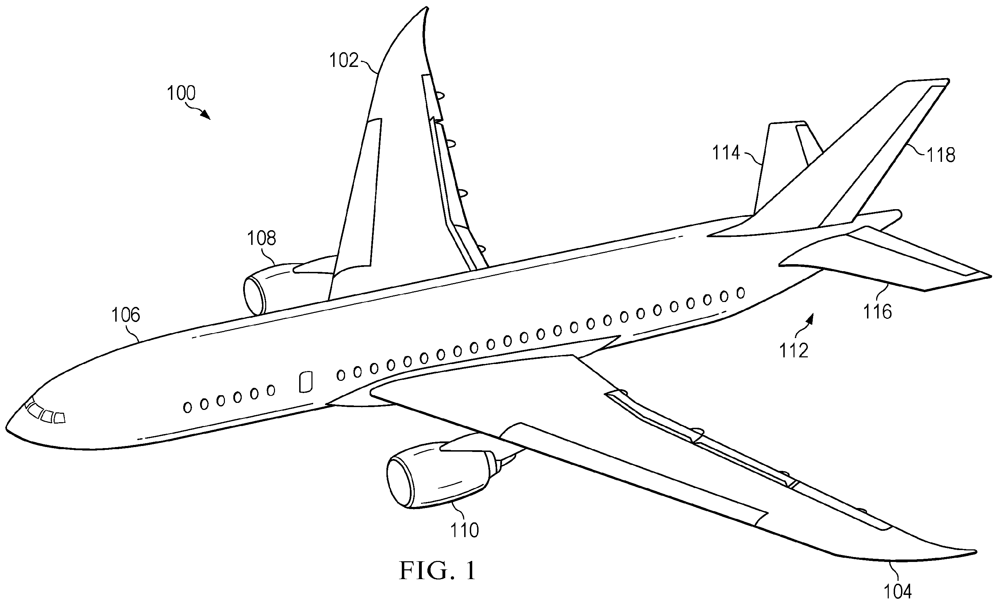

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have coatings configured to protect composite materials from ultraviolet light or visible light degradation. Coatings of the illustrative examples can be present on at least one of wing **102,** wing **104,** body **106,** or tail section **112.**

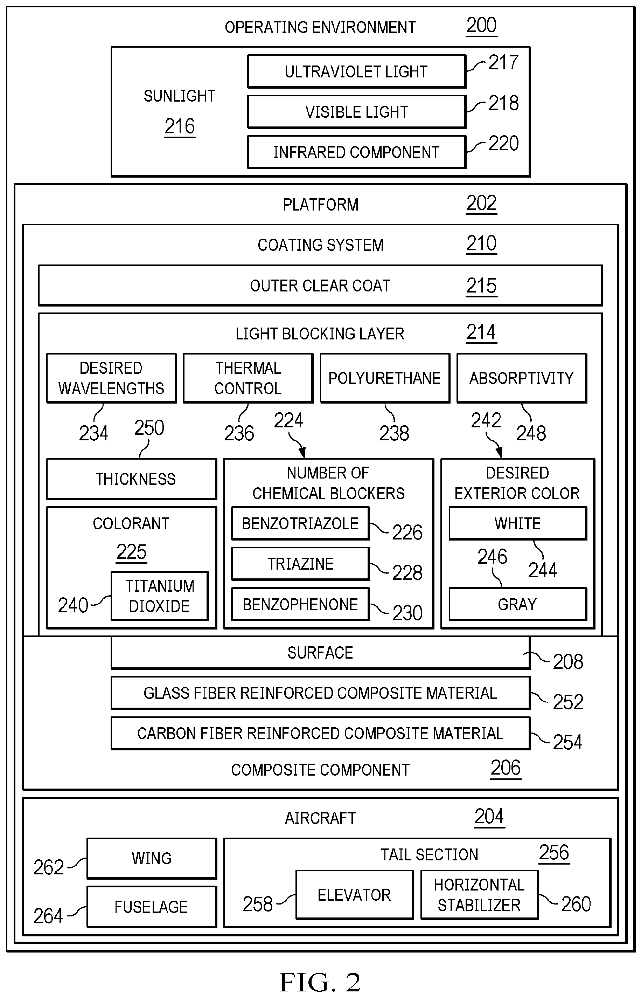

Turning now to **Figure 2****,** an illustration of a block diagram of an operating environment is depicted in accordance with an illustrative embodiment. Platform **202** is present in operating environment **200** and exposed to sunlight **216.** Platform **202** can take any desirable form.

Coating system **210** provides protection for composite component **206** of platform **202.** Coating system **210** protects composite component **206** from sunlight **216.** Coating system **210** comprises light blocking layer **214** can be applied over composite component **206** as one of a coating, a film, or an ink.

A coating can be, for example, a thin layer or covering that may be, for example, liquid, fluid, continuous, or a material that flows freely and is of constant volume. Examples of coatings for this description include paints, primers, topcoats, and the like, and combinations thereof.

A film can be, for example, a thin material covering that may be in a solid or semi-solid state, and in some embodiments, may be flexible. Examples of films for this description include decals, stickers, wraps and the like.

An ink is a colored liquid or fluid used for writing, drawing, printing and the like. Examples include solid, liquid, hybrid and the like inks, and combinations thereof.

Light blocking layer **214** is exposed to operating environment **200.** As a result, sunlight **216** strikes light blocking layer **214.**

Light blocking layer **214** comprises at least one of an epoxy, acrylic, polyurethane **238,** polyamide, modified rosin, hydrocarbon resin, or a modified cellulosic. In some illustrative examples, light blocking layer **214** comprises an epoxy or polyurethane **238.** In some illustrative examples, light blocking layer **214** comprises polyurethane **238.** In some illustrative examples, light blocking layer **214** comprises polyurethane **238** with titanium dioxide **240.**

Composite component **206** comprises a fiber-reinforced matrix material. In some illustrative examples, fiber-reinforced materials comprise at least one of carbon fibers, boron fibers, glass fibers, polyester fibers, aramid fibers (such as, for example, Kevlar^{®}), polymer fibers, or other desirable reinforcing fibers. In some illustrative examples, composite component **206** comprises at least one of polyester, vinyl ester, cyanate ester, bismaleimide, polyetherimide, polyphenylene sulphide, polyaryletherketone (including PEEK and PEKK), thermoset materials such as epoxy materials, or nylon. In some illustrative examples, an epoxy composite material comprises at least one of a novolac epoxy, an aromatic epoxy, an aliphatic epoxy, or a cyclic epoxy. In some illustrative examples, composite component **206** comprises a thermoset resin.

Currently, epoxy resin systems may incorporate multi-functional epoxy systems with di-functional epoxy systems to achieve a polymeric matrix with both improved tensile strength and compression-after-impact (CAI). The di-functional epoxy resin may be saturated, unsaturated, cycloaliphatic, aromatic, alicyclic, or heterocyclic. Examples of the di-functional epoxy resins may be those based on diglycidyl ether or Bisphenol F, Bisphenol A, phenol, and cresol epoxy novolacs, glycidyl ethers of phenol-aldehyde adducts, glycidyl ethers of aliphatic diols, diglycidyl ether, diethylene glycol diglycidyl ether, aromatic epoxy resins, aliphatic polyglycidyl ethers, epoxidised olefins, aromatic glycidyl amines, heterocyclic glycidyl imidines and amides, glycidyl ethers, or any combination thereof. The preferable di-functional epoxy resin may be from diglycidyl ether of Bisphenol F, diglycidyl ether of Bisphenol A, diglycidyl dihydroxy naphthalene, or any combination thereof.

In some illustrative examples, composite component **206** comprises one of a thermoset resin, an epoxy resin or a thermoplastic resin. In some illustrative examples, composite component **206** comprises carbon fiber-reinforced composite material **254.** In some illustrative examples, composite component **206** comprises a glass fiber-reinforced composite material **252.** Composite component **206** can be formed using any desirable method. In some illustrative examples, composite component **206** can be formed through resin infusion, wet layup, or resin sweep.

Surface **208** is an exterior surface of composite component **206.** In some illustrative examples, light blocking layer **214** is in contact with surface **208** of composite component **206.** In some illustrative examples, a surfacing film or primer is present between surface **208** and light blocking layer **214.**

In some illustrative examples, light blocking layer **214** is an exterior surface of platform **202.** In some illustrative examples, light blocking layer **214** has desired exterior color **242** for performance. In some illustrative examples, light blocking layer **214** is white **244** or gray **246.** In some illustrative examples, light blocking layer **214** has desired exterior color for performance that can be selected from white **244,** gray **246,** beige, off-white, or any other desirable color. In some illustrative examples, light blocking layer **214** provides thermal control **236** for coating system **210** through controlled solar absorptivity **248.** Solar absorptivity **248** can be assessed using any desirable standard set forth by a materials or regulatory society such as the American Society for Testing and Materials. In some illustrative examples, solar absorptivity **248** can be assessed using ASTM E903-20.

In some illustrative examples, light blocking layer **214** provides solar absorptivity **248** in a range of 0.20-0.67. In some illustrative examples, light blocking layer **214** provides solar absorptivity **248** in a range of 0.20 to 0.67, or 0.23 to 0.67, or 0.23 to 0.53. In some illustrative examples, light blocking layer **214** provides solar absorptivity **248** in a range of 0.21-0.23. In some illustrative examples, light blocking layer **214** provides solar absorptivity **248** in a range of 0.58-0.67.

Light blocking layer **214** comprises chemical blocker **224.** In some illustrative examples, chemical blocker **224** comprises at least one of benzotriazole **226,** triazine **228,** or benzophenone **230.** In some illustrative examples, the amount and specific types of chemical blockers in chemical blocker **224** are configured to block transmission of at least one of ultraviolet light **217** or visible light **218** in desired wavelengths **234.** Chemical blocker **224** is present in light blocking layer **214** in any desirable weight range to prevent transmission of at least one of ultraviolet light **217** or visible light **218.** The weight percentages presented herein are calculated as dry weight percentages.

In some illustrative examples, light blocking layer **214** blocks transmission of at least one of ultraviolet light **217** or visible light **218** through absorption. In some illustrative examples, desired wavelengths **234** are in a range of 300-550 nm. In some illustrative examples, desired wavelengths **234** are in a range of 300-500 nm. In some illustrative examples, desired wavelengths **234** are in a range of 300-800 nm.

In some illustrative examples, light blocking layer **214** comprises colorant **225.** In some illustrative examples, light blocking layer **214** further comprises colorant **225** having a light color. In some illustrative examples, light blocking layer **214** is a light color, such as white, and has the property of low solar absorptivity. In some illustrative examples, light blocking layer **214** comprises a white colorant **225** such as titanium dioxide **240** (aka, titania or TiO₂) in the rutile or anatase form, antimony white, zinc white, silicon dioxide, or the like in a range of 16 wt% - 41 wt%. In some illustrative examples, light blocking layer **214** comprises titanium dioxide **240** in a range of 20 -41 wt%. In some illustrative examples, light blocking layer **214** comprises titanium dioxide **240** in a range of 16 wt%-21 wt%.

In some illustrative examples, coating system **210** for composite component **206** comprises light blocking layer **214** configured to prevent transmission of at least one of ultraviolet light **217** or visible light **218** within desired wavelengths **234** and comprising chemical blocker **224** comprising at least one of benzotriazole **226,** triazine **228,** or benzophenone **230.** In some illustrative examples, light blocking layer **214** is configured to provide desired solar absorptivity **248** and comprising between 16 wt%-41 wt% titanium dioxide.

Thickness **250** of light blocking layer **214** is selected to provide a desired amount of blocking of at least one of ultraviolet light **217** or visible light **218.** A thickness can be measured using any desirable standard set forth by a materials or regulatory society such as the American Society for Testing and Materials. In some illustrative examples, thickness **250** can be assessed using ASTM D4138-22.

Thickness **250** and specific colorant **225** of light blocking layer **214** are selected to provide reflection of infrared components **220** of sunlight **216.** Thickness **250** of light blocking layer **214** is selected to provide desired material properties for coating system **210.** In some illustrative examples, thickness **250** is selected based on at least one of a desired weight, a desired EME performance, and desired flexibility performance of coating system **210.** In some illustrative examples, thickness **250** is selected based on a location for coating system **210** on platform **202.** In some illustrative examples, thickness **250** can be selected depending upon operating environment **200.** In some illustrative examples, light blocking layer **214** comprises thickness **250** between 1.0-4.0 mils.

In some illustrative examples, platform **202** takes the form of aircraft **204.** In these illustrative examples, aircraft **204** comprises composite component **206** and coating system **210** on composite component **206.** Coating system **210** comprises light blocking layer **214** comprising chemical blocker **224** configured to prevent transmission of at least one of ultraviolet light **217** or visible light **218** within desired wavelengths **234** and light blocking layer **214** configured to reflect infrared components **220** of sunlight **216.** In some illustrative examples, light blocking layer **214** comprises polyurethane **238** or an epoxy with chemical blocker **224.** In some illustrative examples, light blocking layer **214** further comprises with titanium dioxide **240.**

Composite component **206** can take the form of any desirable component or portion of a component of platform **202.** In some illustrative examples, composite component **206** is part of tail section **256** of aircraft **204.** In some illustrative examples, composite component **206** is horizontal stabilizer **260.** In some illustrative examples, horizontal stabilizer **260** can take the form of horizontal stabilizer **116** of **Figure 1****.** In some illustrative examples, composite component **206** is elevator **258** in tail section **256** of aircraft **204.** In some illustrative examples, composite component **206** is wing **262** of aircraft **204.** In some illustrative examples, composite component **206** is fuselage **264** of aircraft **204.** In some illustrative examples, composite component **206** is one of fuselage **264,** wing **262,** or a portion of tail section **256** of aircraft **204.**

In some illustrative examples, outer clear coat **215** is present in coating system **210.** Outer clear coat **215** is in contact with light blocking layer **214.** Outer clear coat **215** is an optional layer that is not present in some illustrative examples. Outer clear coat **215** can provide additional protection to light blocking layer **214** from undesirable wear.

Coating system **210** of **Figure 2** can be applied by at least one of spraying, inkjet printing, wiping, rolling, or any other desirable application method. Light blocking layer **214** can be applied in a liquid form to composite component **206.** In some illustrative examples, light blocking layer **214** can be co-cured with composite component **206.**

The illustration of operating environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment. For example, a surfacing film or primer could be present between surface **208** and light blocking layer **214.**

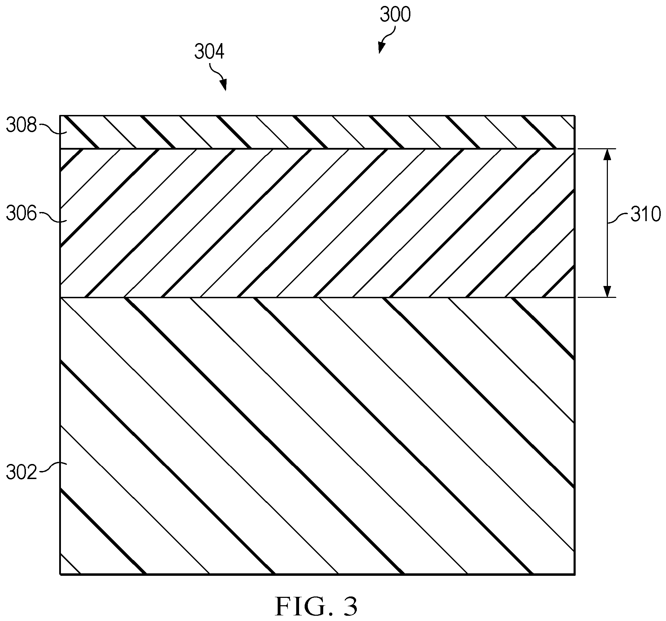

Turning now to **Figure 3****,** an illustration of a cross-sectional view of a coating system on a composite material is depicted in accordance with an illustrative embodiment. Composite component **302** is a physical implementation of composite component **206** of **Figure 2****.** Coating system **304** is present over composite component **302.** Coating system **304** protects composite component **302** from degradation due to sunlight exposure. Coating system **304** is a physical implementation of coating system **210** of **Figure 2****.** View **300** is a cross-sectional view of coating system **304** on composite component **302.**

Coating system **304** comprises light blocking layer **306.** In this illustrative example, light blocking layer **306** is in contact with composite component **302.** In some non-depicted examples, a surfacing film or primer can be present between composite component **302** and light blocking layer **306.** In some illustrative examples, light blocking layer **306** is bonded to composite component **302.**

In this illustrative example, light blocking layer **306** is configured to prevent transmission of at least one of ultraviolet light or visible light within desired wavelengths and configured to reflect infrared components of sunlight using a colorant.

In some illustrative examples, light blocking layer **306** comprises a chemical blocker configured to prevent transmission of the at least one of ultraviolet light or visible light within the desired wavelengths.

In some illustrative examples, light blocking layer **306** is configured to provide a desired solar absorptivity using the colorant. In some illustrative examples, light blocking layer **306** is configured to provide a desired solar absorptivity with titanium dioxide and configured to prevent transmission of at least one of ultraviolet light or visible light within desired wavelengths using a chemical blocker. In some illustrative examples, light blocking layer **306** comprises between 16-41 wt% titanium dioxide, and the chemical blocker.

Light blocking layer **306** protects composite component **302** from at least one of ultraviolet light or visible light within desired wavelengths. Light blocking layer **306** comprises a chemical blocker. The chemical blocker is configured to prevent transmission of the at least one of ultraviolet light or visible light within the desired wavelengths. In some illustrative examples, the chemical blocker comprises at least one of a benzotriazole, a triazine, or a benzophenone.

Light blocking layer **306** prevents or significantly reduces transmission of at least one of ultraviolet light or visible light within the desired wavelengths. Light blocking layer **306** at least one of absorbs or reflects at least one of ultraviolet light or visible light within the desired wavelengths. Light blocking layer **306** provides desirable blocking properties to the desired wavelengths. In some illustrative examples, light blocking layer **306** provides protection to composite component **302** through absorption.

Light blocking layer **306** provides thermal protection for composite component **302.** Light blocking layer **306** also provides protection against at least one of ultraviolet light or visible light. In some illustrative examples, light blocking layer **306** provides protection against infrared components of sunlight using solar absorptivity.

In some illustrative examples, light blocking layer **306** is white. In some other illustrative examples, light blocking layer **306** is gray. In some illustrative examples, light blocking layer **306** has desired exterior color for performance that can be selected from white, gray, beige, off-white, or any other desirable color.

Composite component **302** with coating system **304** is resistant to degradation from cyclic exposure to at least one of ultraviolet light or visible light and moisture. Composite component **302** with coating system **304** meets desired standards for solar absorptivity, color, and crack resistance. Light blocking layer **306** has thickness **310** configured to at least one of selectively absorb or reflect specific wavelengths of solar radiation while meeting the other desired coating characteristics. In some illustrative examples, coating system **304** meets a desired standard for corrosion resistance.

In this illustrative example, outer clear coat **308** is present in coating system **304.** Outer clear coat **308** is in contact with light blocking layer **306.** Outer clear coat **308** is optional in some illustrative examples. Outer clear coat **308** can provide additional protection to light blocking layer **306** from undesirable wear.

As used herein, the phrase "at least one of," when used with a list of items, means different combinations of one or more of the listed items may be used and only one of each item in the list may be needed. For example, "at least one of item A, item B, or item C," may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional.

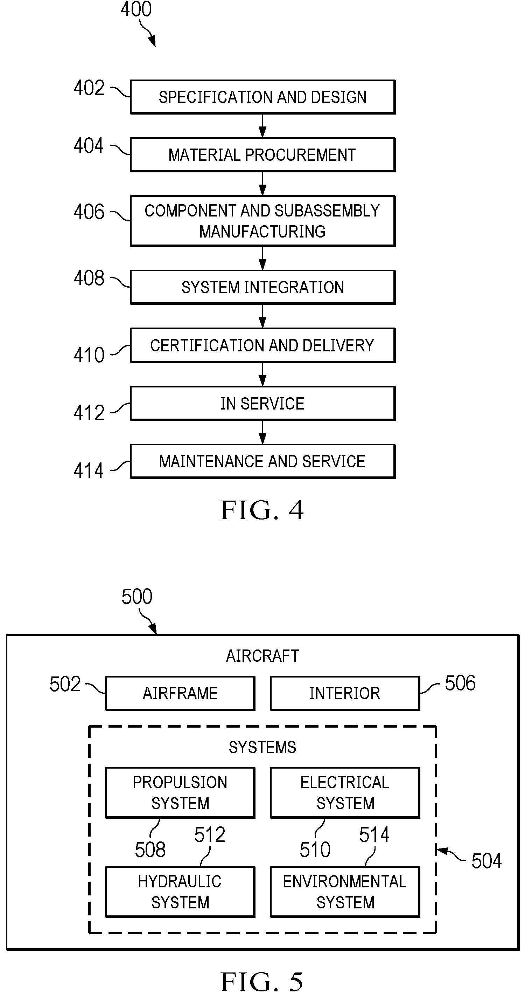

Illustrative embodiments of the present disclosure may be described in the context of aircraft manufacturing and service method **400** as shown in **Figure 4** and aircraft **500** as shown in **Figure 5****.** Turning first to **Figure 4****,** an illustration of an aircraft manufacturing and service method in a form of a block diagram is depicted in accordance with an illustrative embodiment. During pre-production, aircraft manufacturing and service method **400** may include specification and design **402** of aircraft **500** in **Figure 5** and material procurement **404.**

During production, component and subassembly manufacturing **406** and system integration **408** of aircraft **500** takes place. Thereafter, aircraft **500** may go through certification and delivery **410** in order to be placed in service **412.** While in service **412** by a customer, aircraft **500** is scheduled for routine maintenance and service **414,** which may include modification, reconfiguration, refurbishment, or other maintenance and service.

Each of the processes of aircraft manufacturing and service method **400** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 5****,** an illustration of an aircraft in a form of a block diagram is depicted in which an illustrative embodiment may be implemented. In this example, aircraft **500** is produced by aircraft manufacturing and service method **400** of **Figure 4** and may include airframe **502** with plurality of systems **504** and interior **506.** Examples of systems **504** include one or more of propulsion system **508,** electrical system **510,** hydraulic system **512,** and environmental system **514.** Any number of other systems may be included.

Apparatuses and methods embodied herein may be employed during at least one of the stages of aircraft manufacturing and service method **400.** One or more illustrative embodiments may be manufactured or used during at least one of component and subassembly manufacturing **406,** system integration **408,** in service **412,** or maintenance and service **414** of **Figure 4****.**

Further, the current disclosure comprises embodiment according to the following clauses:
Clause 1. A coating system for a composite component comprising:
   a light blocking layer configured to prevent transmission of at least one of ultraviolet light or visible light within desired wavelengths and configured to reflect infrared components of sunlight using a colorant.
Clause 2. The coating system of clause 1, wherein the light blocking layer is bonded to the composite component.
Clause 3. The coating system of clause 1 or 2, wherein the light blocking layer has a desired exterior color for performance.
Clause 4. The coating system of any of clauses 1 to 3, wherein the light blocking layer is white or gray.
Clause 5. The coating system of any of clauses 1 to 4, wherein the light blocking layer comprises a chemical blocker configured to prevent transmission of the at least one of ultraviolet light or visible light within the desired wavelengths.
Clause 6. The coating system of clause 5, wherein the chemical blocker comprises at least one of a benzotriazole, a triazine, or a benzophenone.
Clause 7. The coating system of any of clauses 1 to 6, wherein the colorant comprises titanium dioxide, and wherein the light blocking layer comprises titanium dioxide in a range of 16-41 wt %.
Clause 8. The coating system of any of clauses 1 to 7, wherein the light blocking layer comprises a thickness between 1.0-4.0 mils.
Clause 9. The coating system of any of clauses 1 to 8, wherein the light blocking layer provides thermal control for the coating system through controlled solar absorptivity.
Clause 10. The coating system of any of clauses 1 to 9, wherein the light blocking layer provides a solar absorptivity in a range of 0.20-0.67.
Clause 11. The coating system of any of clauses 1 to 10, wherein the desired wavelengths are in a range of 300-550 nm.
Clause 12. The coating system of any of clauses 1 to 12, further comprising:
   an outer clear coat in contact with the light blocking layer.
Clause 13. An aircraft comprising:
   a composite component; and
   a coating system on the composite component, the coating system comprising:
      a light blocking layer configured to reflect infrared components of sunlight with titanium dioxide and configured to prevent transmission of at least one of ultraviolet light or visible light within desired wavelengths using a chemical blocker.
Clause 14. The aircraft of clause 13, wherein the composite component comprises a carbon fiber-reinforced composite material.
Clause 15. The aircraft of clause 13 or 14, wherein the composite component comprises a glass fiber-reinforced composite material.
Clause 16. The aircraft of any of clauses 13 to 15, wherein the composite component is a wing.
Clause 17. The aircraft of any of clauses 13 to 16, wherein the composite component is a portion of a tail section of the aircraft.
Clause 18. The aircraft of any of clauses 13 to 17, wherein the composite component is a fuselage.
Clause 19. The aircraft of any of clauses 13 to 18, wherein the composite component is one of a fuselage, a wing, or a portion of a tail section of the aircraft. Clause 20. The aircraft of any of clauses 13 to 19, wherein the desired wavelengths are in a range of 300-550 nm.
Clause 21. The aircraft of any of clauses 13 to 20, wherein the desired wavelengths are in a range of 300-800 nm.
Clause 22. The aircraft of any of clauses 13 to 21, wherein the composite component comprises one of a thermoset resin, an epoxy resin or a thermoplastic resin.
Clause 23. The aircraft of clause 22, wherein the composite component comprises an epoxy resin.
Clause 24. The aircraft of any of clauses 13 to 23, wherein the composite component comprises at least one of carbon fibers, boron fibers, glass fibers, polyester fibers, polymer fibers, or aramid fibers.
Clause 25. The coating system of any of clauses 13 to 24, wherein the chemical blocker comprises at least one of a benzotriazole, a triazine, or a benzophenone.
Clause 26. A coating system for a composite component comprising:
   a light blocking layer configured to provide a desired solar absorptivity with titanium dioxide and configured to prevent transmission of at least one of ultraviolet light or visible light within desired wavelengths using a chemical blocker, the light blocking layer comprising between 16-41 wt% titanium dioxide and the chemical blocker.
Clause 27. The coating system of clause 26, wherein the desired wavelengths are in a range of 300-550 nm.
Clause 28. The coating system of clause 26 to 27, wherein the desired wavelengths are in a range of 300-800 nm.

The illustrative examples present a coating system that protects a composite component. The coating system protects the composite component from degradation from cyclic exposure to at least one of ultraviolet light or visible light and moisture while meeting standards for solar absorptivity, color, and crack resistance. Layers are arranged in a specific order and with a specific thickness within the coating system to selectively absorb and/or reflect specific wavelengths of solar radiation while meeting the other standards for purpose.

The description of the different illustrative embodiments has been presented for purposes of illustration and description and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A coating system (210, 304) for a composite component (206, 302) comprising:
a light blocking layer (214, 306) configured to prevent transmission of at least one of ultraviolet light (217) or visible light (218) within desired wavelengths (234) and configured to reflect infrared components (220) of sunlight (216) using a colorant (225).

2. The coating system (210, 304) of claim 1, wherein the light blocking layer (214, 306) is bonded to the composite component (206, 302).

3. The coating system (210, 304) of claim 1 or 2, wherein the light blocking layer (214, 306) has a desired exterior color (242) for performance.

4. The coating system (210, 304) of any of claims 1 to 3, wherein the light blocking layer (214, 306) is white (244) or gray (246).

5. The coating system (210, 304) of any of claims 1 to 4, wherein the light blocking layer (214, 306) comprises a chemical blocker (224) configured to prevent transmission of the at least one of ultraviolet light (217) or visible light (218) within the desired wavelengths (234).

6. The coating system (210, 304) of claim 5, wherein the chemical blocker (224) comprises at least one of a benzotriazole (226), a triazine (228), or a benzophenone (230).

7. The coating system (210, 304) of any of claims 1 to 6, wherein the colorant (225) comprises titanium dioxide (240), and wherein the light blocking layer (214, 306) comprises titanium dioxide (240) in a range of 16-41 wt %.

8. The coating system (210, 304) of any of claims 1 to 7, wherein the light blocking layer (214, 306) comprises a thickness between 1.0-4.0 mils.

9. The coating system (210, 304) of any of claims 1 to 8, wherein the light blocking layer (214, 306) provides thermal control (236) for the coating system (210, 304) through controlled solar absorptivity (248).

10. The coating system (210, 304) of any of claims 1 to 9, wherein the light blocking layer (214, 306) provides a solar absorptivity (248) in a range of 0.20-0.67.

11. The coating system (210, 304) of any of claims 1 to 10, wherein the desired wavelengths (234) are in a range of 300-550 nm.

12. The coating system (210, 304) of any of claims 1 to 12, further comprising:
an outer clear coat (215, 308) in contact with the light blocking layer (214, 306).

13. An aircraft (100, 204, 500) comprising:
a composite component (206, 302); and
a coating system (210, 304) on the composite component (206, 302), wherein the coating system (210, 304) is a coating system according to any of claims 1 to 12.

14. The aircraft (100, 204, 500) of claim 13, wherein the composite component (206, 302) comprises a carbon fiber-reinforced composite material or a glass fiber-reinforced composite material.

15. The aircraft (100, 204, 500) of claim 13 or 14, wherein the composite component (206, 302) is one of a fuselage (264), a wing (102, 104, 262), or a portion of a tail section (112, 256) of the aircraft (100, 204, 500).
